# EUROPEAN PATENT APPLICATION

(11) **EP 1 460 859 A1**
(43) Date of publication of application: **22.09.2004**
(21) Application number: 03006302.8
(22) Date of filing: 19.03.2003
(51) Int. Cl.: H04Q 3/00, H04L 12/24

(54) **Method, system and apparatus for managing signaling connections in a telecommunications network**

(71) Applicant: SIEMENS AKTIENGESELLSCHAFT, 80333 München (DE)
(72) Inventor: Heitz, Andreas, 85737 Ismaning (DE); Krupp, Harald, Dr., 82319 Starnberg (DE)

(57) **Abstract**

The invention relates to network management to plan and run optimized telecommunication and data networks and, more particularly, to the administration of signaling connections between adjacent network elements. In telecommunications networks it has been found convenient to have centralized management of the network elements. However, the prior centralized management systems had failed to provide a suitable means to provide efficient configuration of the network resources. Problematically, managed objects must be administered in the right sequence and/or with identical parameter values at both ends of the signaling connections. In accordance with the present invention there is provided a method for managing signaling connections in a telecommunications network. Among a plurality of network elements there is determined a second network element adjacent to a first based on an operator input. The data associated with the first network element is then automatically transposed for the second network element such that the representation of a signaling connection between the first and second network elements is made commensurate to the representation for the first network element. An advantage thereof is that the signaling connection is managed for the network elements without the risk of wrong input which would prevent implausible routing data to be entered.

## Description

The invention relates to network management to plan and run optimized telecommunication and data networks and, more particularly, to the administration of signaling connections between adjacent network elements.

Modern telecommunications networks generally include two separate communication pathways. The first is a voice network that handles the transmission of voice or other information between users. The second is a signaling network that facilitates the dynamic linking of a plurality of voice network circuits, such that a voice-type connection is established between a calling party and a called party. Additionally, the signaling network provides a framework through which non-voice related information may be transported in a manner that is transparent to the user. This signaling technique is often referred to as "out of band" signaling, where the term "band" implies voice band. Common examples of such out of band data transport are the access of 800 number database services, calling card verification services and caller ID services.

In order to provide consistent and reliable communication across the signaling network infrastructure, a common or standard digital signaling protocol known as Signaling System 7 (SS7) has been developed. SS7 is an out of band common channel signaling system that uses labeled messages to transport circuit related signaling information, non-circuit related signaling information, network resident database service information and other information that may be used for the establishment of communication services. From a hardware perspective, an SS7 network includes a plurality of SS7 network elements or nodes, generically referred to as Signaling Points (SP), that are interconnected using signaling links, also referred to as SS7 links.

In such a telecommunications network it has been found convenient to have centralized management of the network elements. However, the prior centralized management systems had failed to provide a suitable means by which the network resources can be configured. In particular, applications for network management in a Public Switched Telephone Network (PSTN) and Next Generation Converged Networks (NGN), it would be highly desirable to provide efficient configuration of the network resources.

Typically, these applications are defined as specific data and object models, in part, in the Q.751 Series of the ITU recommendations. One of the main problems is that during, for example, creation, deletion and modification of objects, several prerequisites and dependencies between these objects have to be detected, considered and resolved. Problematically, the managed objects must be administered in the right sequence and/or with identical parameter values at both ends of the signaling connections.

In particular, this applies to the administration of directly connected (or adjacent) network elements. Nearly identical data must be provided for signaling connections in the two network elements providing for both ends of a connection. If the signaling link sets and/or links of two adjacent network elements are independently managed, then wrong input leads to implausible routing data and, hence, routing errors.

In a typical situation, the operator works with single configuration commands, for instance, via command line interfaces of a network element, by usually administering only one managed object in one network element at a time. Therefore, the operator must memorize a number of prerequisites and dependencies and a failure to do so leads to rejected configuration commands or, worse, to unrejected commands that cause implausible routing data to be entered into the network elements.

In addition, the previous attempts at network management were limited to configuring a single network element at a time. Further, network re-configurations or ad-hoc or short term changes were not possible using the previous method.

It is, therefore, an object of the present invention to provide a method for managing signaling connections.

It is an other object of the present invention to provide a method for managing signaling connections automatically.

It is another object of the present invention to provide a method for managing signaling connections that automatically transposes from the administration of one network element the configuration data for another network element.

It is another object of the present invention to provide a method for managing signaling connections that automatically determines an adjacent network element.

It is an other object of the present invention to provide a system for managing signaling connections.

In accordance with the foregoing objectives, there is provided by the invention at least a method for managing signaling connections in a telecommunications network having network elements including a first network element and a plurality of other network elements. Among the plurality of the other network elements there is determined a second network element adjacent to the first based on an operator input. The data associated with the first network element is then automatically transposed for the second network element such that the representation of a signaling connection between the first and second network elements is made commensurate to the representation for the first network element.

An advantage thereof is that the signaling connection is managed for the network elements without the risk of wrong input which would prevent implausible routing data to be entered.

In one aspect of the invention, the data to be transposed can be obtained from a history of commands associated with administering the signaling connection and/or a database stored in any of the network elements.

In case of absence of objects prerequisite to managing the signaling connection, according to the invention, there is further provided the creation of the prerequisite objects for the second network element. An advantage therefore is that the operator need not verify the presence of the prerequisites in the second network element.

In an other aspect, the invention provides detecting a link set terminating at the first network element by querying for the second network element all objects representing link sets. In case no link set for the second network element that terminates at the first network element is detected, the invention creates a new link set for the second network element by making the link set of the second network element commensurate to the link set of the first network element. In addition the present invention is capable of the following network management tasks: deleting a link and/or a link set, modifying a link and/or a link set, performing a status change of a link and/or a link set and creating a link and/or a link set according to a respective management operation at the first network element.

The present invention is further providing a method for detecting the adjacent network element by extracting a first point code and a first sub-network identifier that identifies first network element and, in addition, a parameter indicating an adjacent network element. The invention compares the parameter and the first sub-network identifier to a point code and a sub-network identifier of a respective network element from at least a subset of the other network elements. An advantage therefore is that the operator does not have to specify the adjacent network element, which, in a network of a plurality of sub-networks may be difficult for an operator to detect.

The present invention is also directed to managing signaling connections in a telecommunications network that supports a Signaling System 7 (SS7) standard.

The invention is further directed to providing a task group that is transparent to an operator for grouping objects for managing the signaling connection associated with the first network element and dependent objects for managing the signaling connection associated with the second network element. An advantage therefore is that the operation is transparent to the operator.

The invention is further a computer-readable product having recorded thereon computer instructions for instructing a computer to execute the novel invention.

The invention also has within its scope a system for managing signaling connections in a telecommunications network that includes a plurality of network elements and a control module for configuring at least a first network element in accordance with an operator input. A control program determines a second network element that is adjacent to the first network element and causes a representation of the signaling connection of the first network element to be transposed for the second network element such that a corresponding signaling connection for the second network element is made commensurate to the representation for the first network element.

Similar to the method of the invention, the system advantageously assists an operator in managing network resources.

The system of the invention further has the capability to detect a link set terminating at the first network element by querying for the second network element all objects representing link sets.

The invention further provides for the determination of a link set and links of the second network element terminating in the first network element by at least determining that the first and second network elements are in a same sub-network.

The system of the invention further provides a task group that is transparent to an operator for grouping objects associated with the first network element and dependent objects for managing the signaling connection associated with the second network element.

In the following, of the invention will be described in more detail in the form of an embodiment which is better understood in accordance with the following figures.
Figure 1 is a flow diagram of the present invention;
Figure 2 is a diagram of a network configuration;
Figures 3 a-d are a flow diagram of the present invention;
Figure 4 is a system diagram of the present invention.

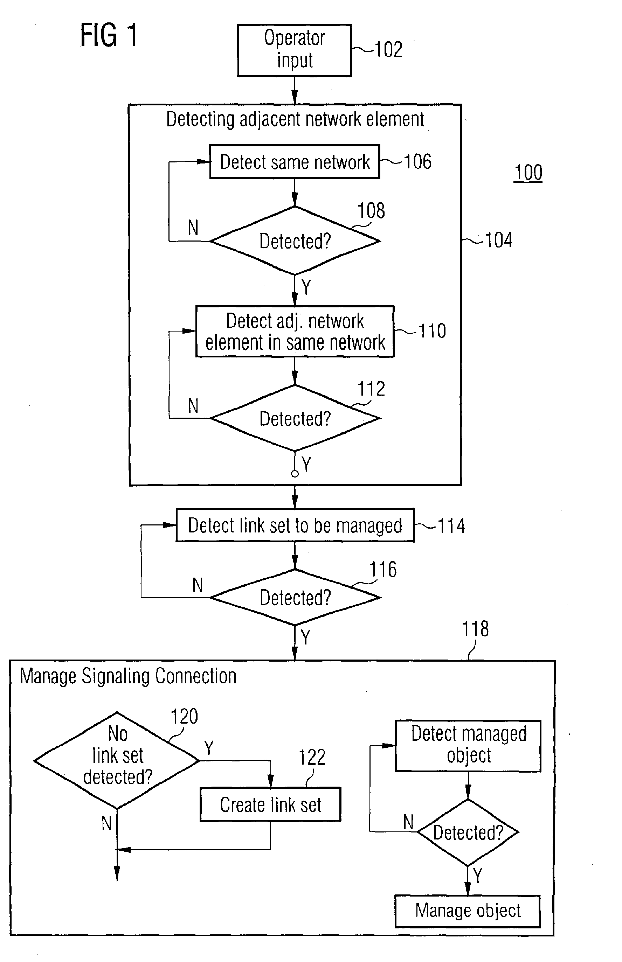

The invention will now be described with reference to flow diagram of Figure 1 which shows in general form the flow diagram 100 of the present invention. In step 102, an operator input is made to a first network element, which is denoted by a network element A. In a preferred aspect of the invention, the operator input includes the point code of network element A, the network or sub-network name, and a desired signaling link set that is to be managed. With the operator input, the invention extracts the network or sub-network name, identified by, for example, a network indicator. In addition, the invention may extract an identifier indicating the address of the network element A by using, for example, a point code of the network element A. Further, there may be extracted an adjacent point code, which indicates the targeted network element that is to be managed in commensuration with the data representative of the signaling connection for network element A.

In step 104, the invention detects the adjacent network element. This may, for example, be accomplished by accessing data of available network elements and, in each network element, determining the network indicator and the own point code for the respective network element. In steps 106 and 108, the invention may detect elements belonging to the same network or sub-network and, upon detecting network elements within the same network or sub-network, continues in steps 110 and 112. Among the detected network elements in the same network or sub-network, the method then detects the adjacent network element by matching information, such as, the adjacent point code detected in step 102.

The invention now detects in steps 114 and 116 the link set to be managed, e.g., in the adjacent network element. More specifically, and according one possible aspect of invention, the link sets of the detected network element are searched for the link set to which network element A is the adjacent network element.

After determining the correct network or sub-network and, within that, the adjacent network element, and for the adjacent network element the appropriate link set, the invention now has all the prerequisites to manage the signaling connection. Part of managing signaling connection may, for instance, be creation of an appropriate link set if no such link set was identified (steps 120 and 122). In more detail, the invention creates the link set for the adjacent network element to be commensurate with the attributes from the link set of the network element A. The step of managing may further comprise steps 126 to 130, in general, for detecting an object to be managed and managing the object, such as, creating link sets and/or links, deleting, modifying, activating and/or changing the status of links and/or link sets.

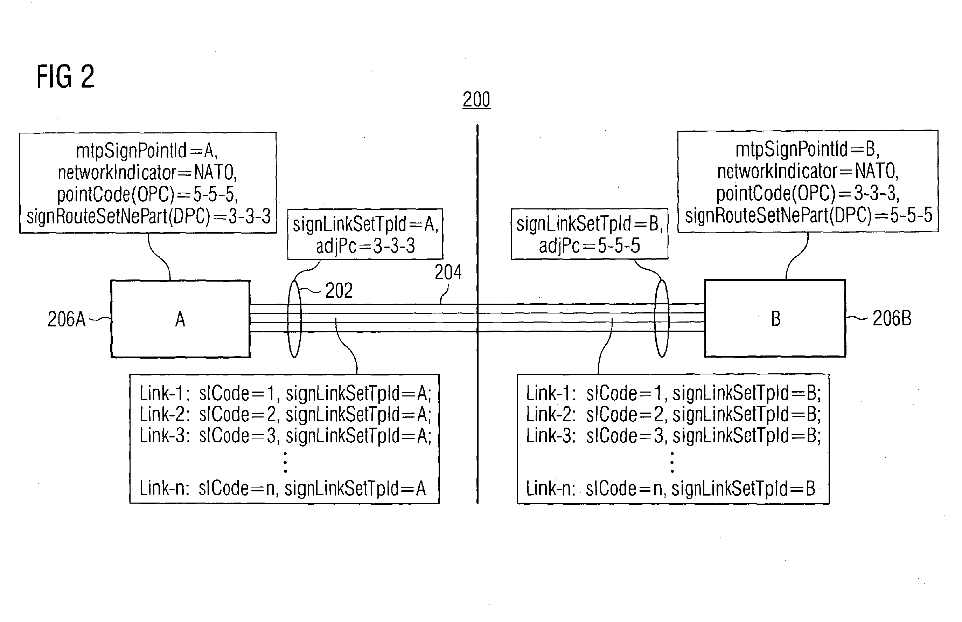

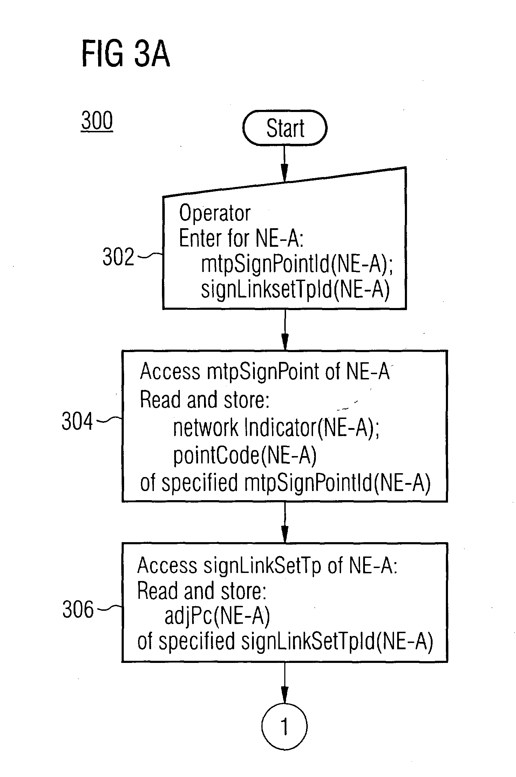

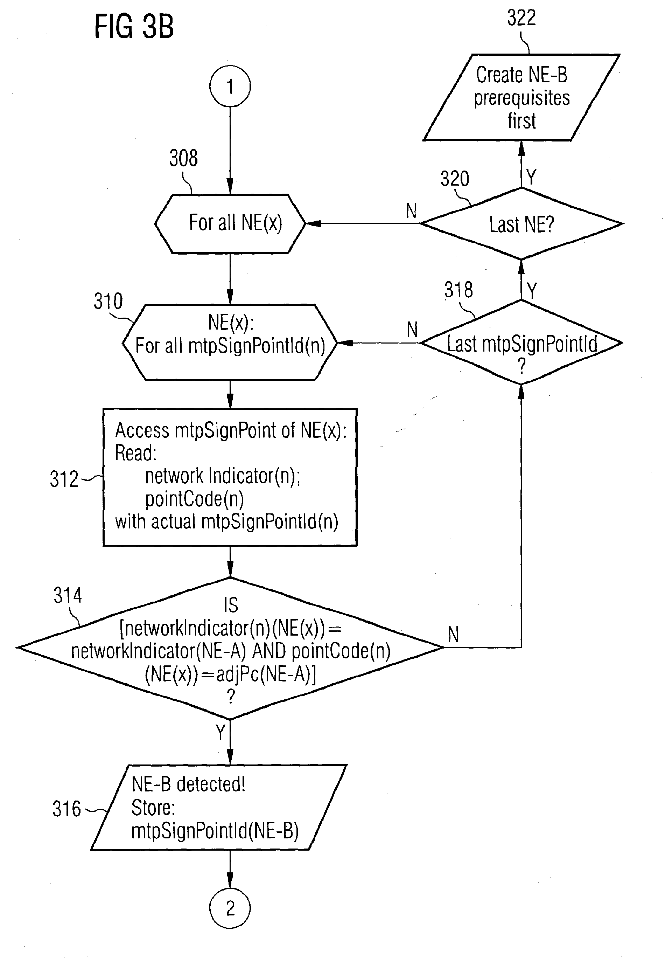

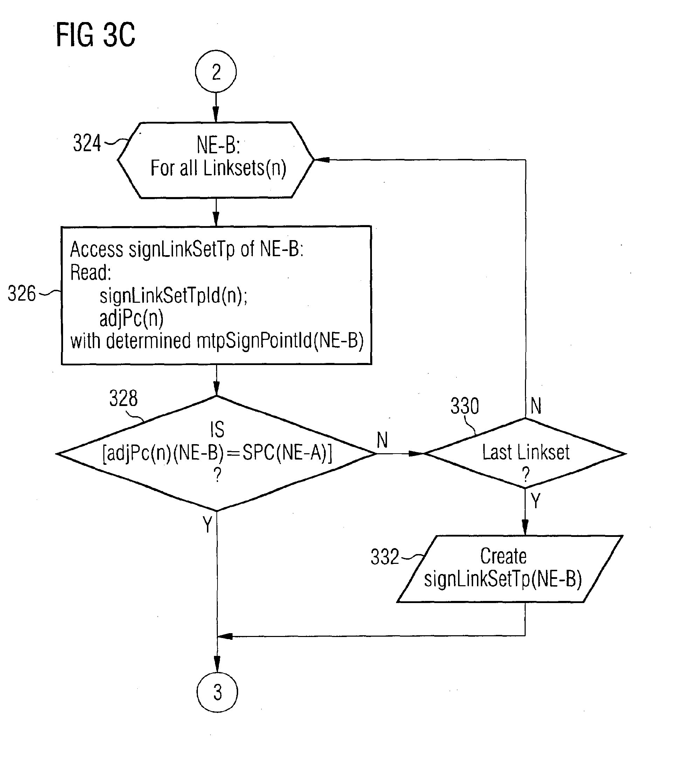

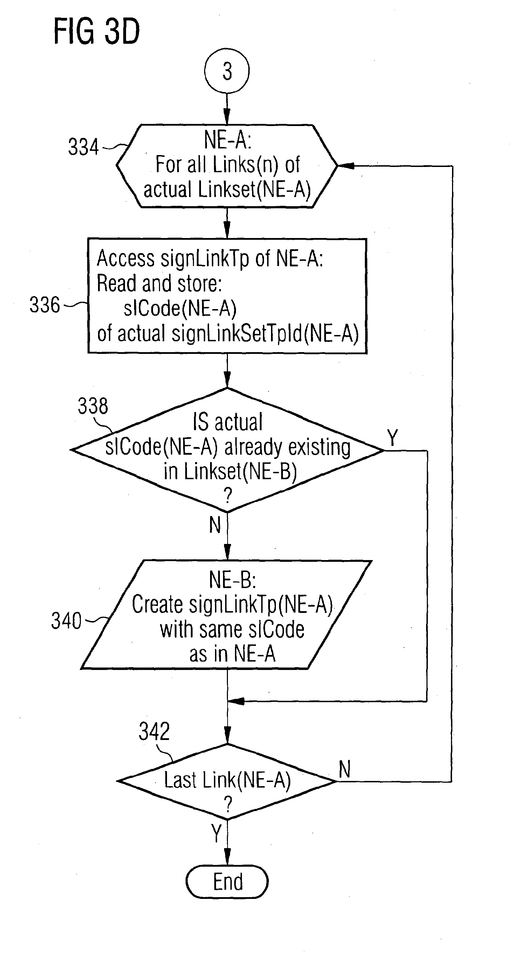

The invention will now be described in more detail with reference to the network configuration shown in figure 2 and the embodiment set forth figures 3a-d. Of course, the embodiment is merely explanatory and the present invention is applicable to other embodiments. For illustrative purposes figure 2 shows a signaling view of a Signaling System 7 (SS7) network configuration. Of course, the signaling view 200 is used only for exemplary purposes and may be substituted by another signaling system. As shown, a bundle of connections 202, having more or less equal properties, is denoted as a signaling link set and the single connections within one signaling link set are denoted as signaling links 204. A signaling link set together with its entire set of signaling links forms the signaling connection between two adjacent network elements 206A and 206B.

In terms of SS7, network element A and network element B are SS7 signaling points, each signaling point having an address (signaling point code) which is a unique address within a given network or sub-network.

Figure 2 depicts network elements A and B as two adjacent signaling points, which are connected with a SS7 link set. The signaling link set can contain up to n signaling links. In figure 2, each link is identified by a unique value called signaling link code (SLC). Network element A can support several networks including those for national or international traffic. The regarded network is identified by a network indicator (NI), for example, the network indicator NATO. Within this network, network element A is identified by an originating point code or otherwise a signaling point code (SPC), which is a unique signaling address of the network element A within the example network NATO.

Network element A can have a plurality of destinations within the example network (NATO) which are in communication with network element A for sending and receiving messages. In the example, one destination is defined by another signaling point code or destination point code, which is the unique signaling address to transmit messages to network element B from any network element within the example network.

Network element B operates in a similar manner to network element A described above, noting that the specific parameters and objects correspond to network element B. It shall be appreciated that network element B may have additional parameters and objects than network element A.

It shall be appreciated, in the example, that the adjacent point code for the link set 202 of network element A is the signaling point code of network element B, because network element B is the corresponding adjacent network element of network element A.

In the operation of the network configuration shown in figure 2, network elements A and B are connected by a signaling link set, which contains, for example, several signaling links.

Now that a general understanding of the network configuration in figure 2 has been described, the inventive embodiment illustrated by the flow diagram in figures 3a-d will be discussed in more detail.

In a suitable interface, the operator enters the name of the applicable network and the signaling link set within this network which is to be managed. It shall be appreciated that the implementation of the novel invention is independent on how the data is obtained. Whether the data is retrieved directly from the network elements or available by means of a data base is a further aspect of the invention. Further, the command interface, which can be a known Q3 interface, can be any type of interface and the Q.751 interface protocol therefore may be any type of protocol.

To proceed, with the flow diagram 300 shown in the figures, the signaling point identifier and the signaling link set termination point identifier are input. In step 304, the method accesses the relevant data of an object representing the specified signaling point. With this object, the method reads out a parameter representative of the network indicator and a value representing a point code for the network element A. This value indicates the own signaling point code of network element A within the exemplary network.

In step 306, the method accesses information related to the link set specified by the signaling link set termination point ID. The method further reads a value representative of the adjacent point code for the link set. This value indicates the point code of network element B within the network.

According to the invention, the method automatically detects the adjacent network element which will be described according to steps 308-322. In step 308, the method accesses the data of the available network elements. In the method shown, this is done recursively for each network element. In each network element, the method accesses the data of the object representative for the respective signaling point (step 310) and reads out the value of a parameter representative of the corresponding network indicator and a value representative of the point code in step 312. In step 314, the method searches for the network with the same network indicator as the network to which the link set of network element A belongs (NATO in the example). It should be noted that link sets of the network elements can belong to different networks. According to step 314, the adjacent network element is detected when the network element is found to have the same point code as the adjacent point code of the link set to be managed in network element A. For example, referring back to figure 2, it is shown that the value of the point code of the adjacent network element B is 3-3-3, and the value of the adjacent point code associated with the link set originating at network element A is also 3-3-3. The method of the present invention detects that the adjacent point code information for the link set of the network element A matches the point code for the network element B and determines that be network element B is adjacent to network element A as illustrated by step 316.

In the case that no adjacent network element is found, the invention examines the next signaling point of the network element in step 318 until all signaling points of the respective network element are examined. After which, the method proceeds the next network element in step 320 and executes steps 308 to 314 recursively. This process continues until the adjacent network element is detected. If a matching point code does not exist in any of the available network elements then the adjacent network element may be assigned manually by the operator, as well as any prerequisite data for operating the network element, according to step 322.

Once the adjacent network element is detected, the next step according the invention is to determine the link set of the detected adjacent network element to be managed. To that, the method in step 324 examines the link sets for the adjacent network element and, in step 326, reads out a value representing the adjacent point code for the examined link set. According to step 328, the method searches for a link set with a value of the adjacent point code that is equal to the point code of the network element A, of course within the detected network.

The invention continues to access link sets according to step 330 until the correct link set is found. Of course, the invention is not limited to using a recursive method for this or other steps for detecting network element information, but may be, for example, a known procedure such as a get-access method with an appropriate filter. If it is determined that no matching link set exists, the method according to step 332 creates the link set in the adjacent network element, as will be explained below with reference to steps 334 through 342.

In the instance that no link set exists for the adjacent network element, as already explained, the invention creates the link set by entering values of the link set automatically. This may be accomplished by automatically searching the next free link set identifier, by utilizing a procedure for automatic instance naming or by allowing the operator to select a value, for example. The invention creates the link set for the adjacent network element by transposing the relevant data obtained from the operator input and/or from any of the data bases of the network or the network elements.

Now that the adjacent network element has been detected and the correct link set of the adjacent network element has been determined, the invention provides the ability to manage the signaling connection. As will be described in more detail, the invention manages the signaling connection in various ways, including creation, deletion, modification and activation (which may include status changes), of links and/or link sets.

The invention, for example, manages the signaling connection by creating links for a particular link set of the adjacent network element as will be further described according to steps 334 to 342. At step 334, each link of the link set of the network element A is addressed. According to step 336, the attribute representing the signaling link code of the link is read and stored. It is determined in step 338 whether the link, denoted by a signaling link code, which is to be created in accordance with the data for network element A, already exists for the adjacent network element. If the link already exists in the adjacent network element link set, then the invention advances to step 342. If, however, link needs to be created, the method creates the link in the adjacent network element by using consistent data as for the corresponding link in network element A according to step 340. In one aspect, the link is created by transposing the attribute values for the corresponding link in network element A. The process continues until all links are so configured according to step 342. In this manner, the method enters the values for the remaining link attributes by using the same attribute values as determined in the corresponding links of network element A.

In one aspect of the invention it may be desirable to provide by the invention for operator control over any of the transposed attribute values. Of course, the invention automatically allocates the attribute values, however, it may be useful in some instances to allow the operator to manually modify the signaling connection.

As already mentioned, the management of the signaling connection further includes deletion of links and link sets. Similar to that already described for creation of links and/or link sets, the invention deletes a link or link set of, for example, an adjacent network element commensurate with a deletion of a corresponding link and/or link set in the network element A. This is done according to the invention, by automatically calculating the commands for the deletion of the link and/or link set. This may be accomplished, for example, according to the already described method for creating a link and/or link set by transposing the corresponding attribute values of the network element A.

Similarly, when link sets and/or links are to be modified, the invention performs the identical modification in the adjacent network element. To explain, when the operator performs a modification in a link and/or link set at the network element A of the signaling connection, the method automatically calculates the commands for the commensurate modification of the corresponding link and/or link set in the adjacent network element. As before, the required adjacency information is determined in the same manner as already described. Again, the novel invention may comprise transposing the modifications from network element A, or a corresponding command history, to an adjacent network element.

Further, the invention activates or deactivates a link and/or link set corresponding to the activation (deactivation) of a corresponding link and/or link set in the network element A. For example, when the operator performs activation (deactivation) at one end of the signaling connection, the invention automatically calculates the commands for the activation (deactivation) of the link and/or link set of the adjacent network element. This may also be done according the previously-described steps for transposing the attribute values of the network element A.

The present invention is not limited to the specific management methods herein described, but may, for example, comprise any management of the signaling connection, in that it allows for other alterations performed by an operator at one end of a signaling connection to be automatically performed correspondingly at the other end of the signaling connection.

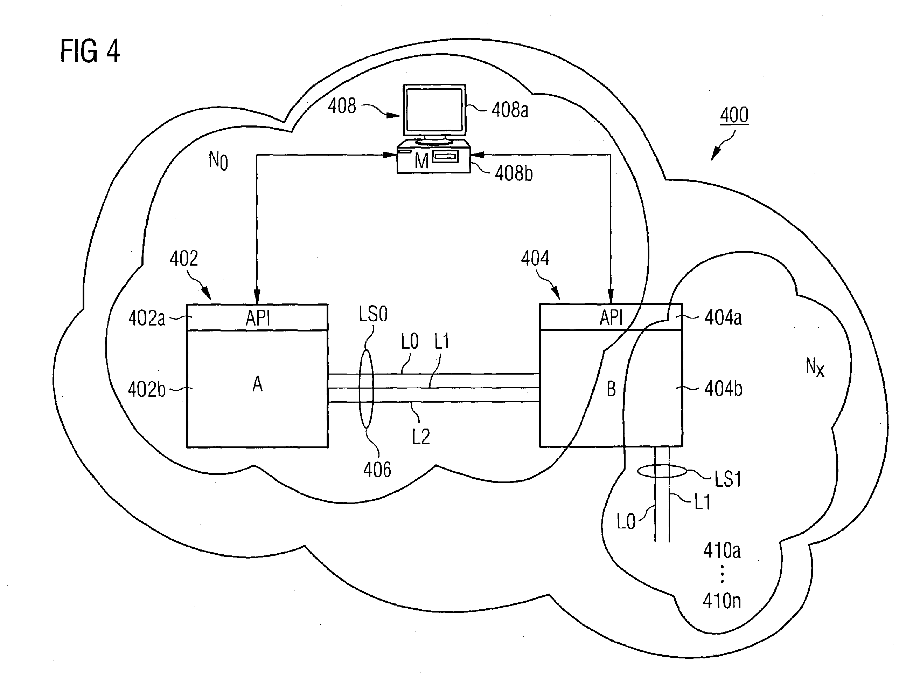

The present invention is also applicable to a system or apparatus as shown in figure 4. In the figure a network 400 may be comprised of one or more sub-networks, such as shown network 0 (N0) and network x (Nₓ). In the sub-network N0, there is provided a network element A 402 which may be comprised of an application program interface (API) 402a and a switching system 402b. For purposes of example, there is provided an adjacent network element B (NE B) which includes corresponding application program interface (API) 404a and a switching system 404b. The network element A 402 is connected through a signaling connection to network element B 404 by a signaling link set 406. The signaling link set 406 may be comprised of individual links L0...L2, which may be better understood with reference to the figure 2. For reasons of simplicity, bearer connections, which may be applied to the present invention, are not shown.

According to the invention, there is provided a network management station 408 which may comprise a suitable operator interface 408a and a control module 408b. The network management system 408 provides operator control of the network elements by means of a connection to an application program interface (API) of any of the network elements. In operation, the operator (not shown) interacts with the operator interface 408 which, in turn, directs the control module to cause corresponding command signal(s) to control a given network element in accordance with the operator input. According to the invention, the operator is assisted by a control program residing in, for example, the control module 408b which automatically creates the commands for controlling the network elements. In the invention, the control program may control the control module 408b in accordance with one or more of the steps already described including, for example, transposing attributes corresponding to the network element A for the second network element B such that the corresponding signaling connection for the network element B is commensurate to that of network element A.

It shall be understood that the network 400 may comprise one or more sub-networks, as already described. For example, in a sub-network Nx, a link set LS1 may exist that connects network element B 404 to other network elements in the sub-network Nx. In the figure, the link set may be comprised of respective links 410a-n. According to the invention, the correct link set connecting network element A to the adjacent network element B 406 is detected, as opposed to detecting the link set in the sub-network Nx, for example. In this manner, the invention correctly identifies the adjacent network element for the automatic management of the signaling connection.

While the various aspects of the invention have been described with respect to certain standards or conventions, it shall be appreciated that the scope of the several claims or not limited thereto, but may, for example, include any standard or protocol not relating to a standard including the ITU Q.751 standard. Therefore, any references to specific objects or attribute names in the specification or figures relating to any standard are exemplary only and the invention certainly covers any embodiments.

## Claims

1. A method for managing signaling connections in a telecommunications network having network elements including a first network element (A) and a plurality of other network elements, comprising the steps of:
from among the plurality of the other network elements based on operator input, determining a second network element adjacent to the first network element; and
automatically transposing data associated with the first network element (A) for the second network element (B) such that the representation of a signaling connection between the first and second network elements for the second network element (B) is made commensurate to the representation for the first network element (A) for managing the signaling connection.

2. The method according to claim 1, wherein said data comprises data obtained from a history of commands associated with administering the signaling connection for the first network element (A).

3. The method according to any of the claims 1 or 2, wherein said data further comprises data obtained from a database stored in any of the network elements.

4. The method according to any of the claims 1 to 3, the step of transposing further comprising, in case of an absence of objects prerequisite to managing the signaling connection, creation of said prerequisite objects for the second network element (B).

5. The method according to any of the claims 1 to 4, wherein the signaling connections comprise link sets and links, further comprising the step of detecting a link set terminating at the first network element (A) by querying for the second network element (B) all objects representing link sets.

6. The method according to claim 5, wherein the step of transposing, in case no link set terminating at the first network element (A) is detected for the second network element (B), creates a new link set for the second network element (B) by making the link set of the second network element (B) commensurate to the link set of the first network element (A), thereby managing the signaling connection.

7. The method according to claim 5, wherein the step of transposing deletes a link and/or a link set at the second network element (B) by deleting the link and/or link set of the second network element (B) corresponding to a deleted link and/or link set of the first network element (A), thereby managing the signaling connection.

8. The method according to claim 5, wherein the step of transposing modifies a link and/or a link set at the second network element (B) by modifying the link and/or link set of the second network element (B) corresponding to a modified link and/or link set of the first network element (A), thereby managing the signaling connection.

9. The method according to claim 5, wherein the step of transposing performs a status change of a link and/or a link set at the second network element (B) by performing a status change for the link and/or link set of the second network element (B) corresponding to a status change of the link and/or link set of the first network element (A), thereby managing the signaling connection.

10. The method according to any of the preceding claims, wherein the step of determining the second network element adjacent to the first network element comprises the steps of:
extracting a first point code and a first sub-network identifier identifying the first network element (A), and a parameter indicating an adjacent network element;
comparing the parameter and the first sub-network identifier to a point code and a sub-network identifier of a respective network element from at least a subset of the other network elements.

11. The method according to any of the preceding claims, wherein the telecommunications network supports a signaling system 7 standard.

12. The method according to any of the preceding claims, further comprising the step of providing a task group that is transparent to an operator for grouping objects for managing the signaling connection associated with the first network element (A) and dependent objects for managing the signaling connection associated with the second network element (B).

13. A computer-readable product having recorded thereon computer instructions for instructing a computer to execute a process in accordance with any of the preceding claims.

14. A system for managing a signaling connection in a telecommunications network, comprising:
a plurality of network elements associated with the telecommunications network;
a control module (M) for configuring a first network element (A) of the plurality of network elements in accordance with an operator input; and
a control program associated with the control module that determines a second network element (B) that is adjacent to the first network element (A) and causes a representation of the signaling connection of the first network element (A) to be transposed for the second network element (B) such that a corresponding signaling connection for the second network element (B) is made commensurate to that for the representation first network element (A).

15. The system according to claim 14, wherein the control module transposes operator commands for the second network element (B).

16. The system according to any of claims 14 or 15, wherein signaling connections of the network elements comprise link sets and links, wherein the control module detects a link set terminating at the first network element (A) by querying for the second network element (B) all objects representing link sets.

17. The system according to claim 14, wherein the control module determines the link set and links of the second network element (B) terminating in the first network element (A) by at least determining that the first and second network elements are in a same sub-network.

18. The system according to claim 17, wherein the second network element is a border network element having additional signaling connections.

19. The system according to any of claims 14 to 18, wherein the telecommunications network supports a signaling system 7 standard.

20. The system according to any of claims 14 to 19, wherein the control module manages a task group that is transparent to an operator for grouping objects for managing the signaling connection associated with the first network element (A) and dependent objects for managing the signaling connection associated with the second network element (B).
